# EUROPEAN PATENT APPLICATION

(11) **EP 4 749 108 A1**
(43) Date of publication of application: **27.05.2026**
(21) Application number: 25212599.2
(22) Date of filing: 31.10.2025
(51) Int. Cl.: F02C 7/32

(54) **ENGINE ACCESSORY CONTROL SYSTEM AND METHOD FOR MITIGATING ERRONEOUS ACCESSORY DISCONNECT WITH SPEED SHIFT**

(30) Priority: 25.11.2024 US 202418958989
(71) Applicant: The Boeing Company, Arlington, VA 22202 (US)
(72) Inventor: TOY, David Kenneth, ARLINGTON, 22202 (US); KERR, Carolyn Ann, ARLINGTON, 22202 (US)
(74) Representative: Plasseraud IP

(57) **Abstract**

A control system and method measures vibrations during operation of an engine connected with rotating accessories. A high vibration condition is identified responsive to a vibration amplitude exceeding a threshold and a vibration frequency being in a frequency band extending around an operating frequency of one rotating accessory. The system and method decide whether operating frequencies of the rotating accessories are within a crosstalk band from each other and, if so, the system and method shift the operating frequency of another rotating accessory to determine which rotating accessory is causing the vibrations.

## Description

### BACKGROUND

### FIELD OF THE DISCLOSURE

Examples of the present disclosure generally relate to systems and methods that control operating frequencies of engine accessories to avoid erroneously disconnecting other engine accessories from engines.

### DESCRIPTION OF THE ART

Some engines, such as aircraft engines, may be connected with various accessories, such as generators, hydraulics pumps, etc. that are mechanically driven by the engine and whose rotational output speeds are a function of engine speed. Occasionally, an accessory may fail and need to be mechanically disconnected or decoupled from the engine to avoid damage to the engine. An impending failure of an accessory may be identified based on vibrations (e.g., amplitudes or magnitudes of the vibrations) of the accessory. An accelerometer coupled near to or on the accessory may sense vibrations. The accessory may be automatically decoupled from the engine once the amplitude of the sensed vibrations reaches a threshold to protect against engine failure.

But other engine accessories that have output speed control features such that the output speed of the accessory is not a function of the engine speed may vibrate as well. For example, a failing Integrated Drive Generator (IDG) may vibrate, and the vibrations of the IDG also may be sensed by the accelerometer. Mechanical crosstalk between another accessory and the IDG may cause the other accessory to erroneously be disconnected from the engine when the other accessory is not, in fact, failing. This can result in unnecessary costs and labor involved with reconnecting the accessory, and can pose safety risks.

A need may exist for a system and method that can avoid erroneously disconnecting one engine accessory due to mechanical crosstalk causing confusion between the source of sensed vibrations.

### BRIEF SUMMARY

The present disclosure provides an engine accessory control system as defined by independent claim 1 and as defined by independent claim 9. Preferred embodiments are defined in the appended dependent claims. In one example, the engine accessory control system includes a sensor configured to measure vibrations during operation of an engine that is connected with and powers a first rotating accessory and a second rotating accessory, and one or more control units configured to identify a high vibration condition responsive to an amplitude of the vibrations that are measured exceeding a vibration threshold and a mechanical frequency of the vibrations being within a designated frequency band extending around a first operating frequency of the first rotating accessory. The one or more control units are configured to decide whether a second operating frequency of the second rotating accessory and the first operating frequency of the first rotating accessory are within a designated crosstalk band from each other responsive to identifying the high vibration condition. Responsive to deciding that the first operating frequency and the second operating frequency are within the designated crosstalk band, the one or more control units are configured to control the second rotating accessory by shifting the second operating frequency of the second rotating accessory away from the first operating frequency of the first rotating accessory.

In one example, the method includes measuring vibrations during operation of an engine that is connected with and powers a first rotating accessory and a second rotating accessory, identifying a high vibration condition responsive to an amplitude of the vibrations that are measured exceeding a vibration threshold and a mechanical frequency of the vibrations being within a designated frequency band extending around a first operating frequency of the first rotating accessory, deciding whether a second operating frequency of the second rotating accessory and the first operating frequency of the first rotating accessory are within a designated crosstalk band from each other responsive to identifying the high vibration condition, and, responsive to deciding that the first operating frequency and the second operating frequency are within the designated crosstalk band, shifting the second operating frequency of the second rotating accessory away from the first operating frequency of the first rotating accessory.

In one example, an aircraft engine accessory control system includes a motion sensor configured to measure vibrations during operation of an engine that is connected with and powers first and second rotating accessories, and one or more control units configured to identify a high vibration condition responsive to an amplitude of the vibrations that are measured exceeding a vibration threshold and a frequency of the vibrations being within a frequency band of an operating frequency of the first rotating accessory. The one or more control units are configured to decide whether an operating frequency of the second rotating accessory and the operating frequency of the first rotating accessory are within a crosstalk band of each other, whether an input speed of the second rotating accessory is stable, and whether the operating frequency of the second rotating accessory is stable. Responsive to deciding that the operating frequency of the first rotating accessory and the operating frequency of the second rotating accessory are within the crosstalk band, the input speed is within a tolerance band of being stable, and the operating frequency of the second rotating accessory is within in a tolerance band of being stable, the one or more control units are configured to shift the operating frequency of the second rotating accessory away from the operating frequency of the first rotating accessory and decide whether the high vibration condition continues.

### BRIEF DESCRIPTION OF THE DRAWINGS

Figure 1 illustrates one example of an engine assembly.
Figure 2 illustrates examples of relationships between an engine speed and mechanical frequencies of rotating accessories of an engine in the engine assembly shown in Figure 1.
Figure 3 illustrates one example of an engine accessory control system.
Figure 4 illustrates a flowchart of one example of a method for controlling engine accessories.
Figure 5A illustrates one example of vibrations of the rotating accessories versus or relative to different speeds of the engine.
Figure 5B illustrates another example of vibrations of the rotating accessories versus or relative to different speeds of the engine.
Figure 5C illustrates another example of vibrations of the rotating accessories versus or relative to different speeds of the engine.
Figure 6 illustrates one example of operation of the engine accessory control system shown in Figure 3.
Figure 7 illustrates another example of operation of the engine accessory control system shown in Figure 3.
Figure 8 illustrates another example of operation of the engine accessory control system shown in Figure 3.
Figure 9 illustrates a perspective front view of one example of a powered system.

### DETAILED DESCRIPTION

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

One or more examples of the inventive subject matter described herein provide a feature to mitigate mechanical crosstalk between rotating accessories that are coupled with, and powered by, the aircraft engine. For example, the systems and methods may mitigate mechanical crosstalk between the IDG and an accessory, such as a backup generator (BUG), engine-driven hydraulic pump, etc., when the IDG is failing and experiencing high vibration. This mitigation feature does not interfere with the BUG disconnect features intended to protect the engine. For example, the BUG is still able to be mechanically decoupled from the engine if the BUG is vibrating outside of a normal or acceptable range of vibration amplitudes.

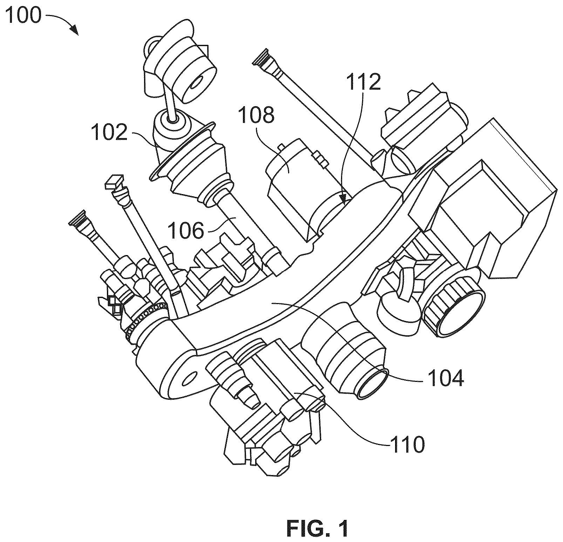

Figure 1 illustrates one example of an engine assembly 100. The engine assembly 100 may operate to generate power for a powered system, such as an aircraft. Not all embodiments of the inventive subject matter described herein, however, are limited to aircraft unless explicitly stated. The engine assembly 100 includes an engine 102 that may be mechanically coupled with an accessory gear box 104 by a shaft 106. The accessory gear box 104 includes interconnected gears that translate rotation of the shaft 106 by the engine 102 to rotation of rotating accessories 108, 110 that are coupled with the accessory gear box 104. In one example, the rotating accessories 108, 110 are engine accessories, such as a BUG 108 and an IDG 110, that are powered by rotation provided by the engine 102 via the shaft 106 and the gears in the accessory gear box 104. The BUG 108 and the IDG 110 may each have a shaft that is connected with the engine shaft 106 by the accessory gear box 104. While the BUG 108 and/or IDG 110 may not rotate, the internal shaft of the BUG 108 may rotate to generate electric energy as a backup energy source in case the primary generator of the powered system fails and the internal shaft of the IDG 110 may rotate to generate electric energy to power various systems of the powered system, such as the electrical systems, hydraulic systems, or the like, of an aircraft.

A motion sensor 112, such as an accelerometer, may be coupled with the accessory gear box 104. This sensor 112 can detect vibrations, such as vibrations of the BUG 108 and IDG 110, during operation. The sensor 112 can output electronic signals indicative of amplitudes and/or frequencies of the vibrations that are sensed. During operation of the engine 102, the rotating accessories 108, 110 may vibrate. If the amplitudes of the vibrations of the BUG 108 become significant (e.g., exceed a designated amplitude threshold), then the shaft of the BUG 108 may be cut to separate the BUG 108 from the accessory gear box 104. For example, the shaft of the BUG 108 may include a shear neck and a cutter that is actuated to score the shaft, resulting in shaft shear when the vibrations of the BUG 108 exceed the amplitude threshold. This can prevent the BUG 108 from damaging the engine 102.

The IDG 110 may be regulated to a fixed frequency output (e.g., four hundred hertz) by a hydromechanical constant speed drive such that the rotational output speed of the shaft of the IDG 110 speed may not be a function of the engine 102 N2 spool rotational speed. The BUG 108 may be a variable frequency generator and operate (e.g., the shaft of the BUG 108 may rotate) at a fixed speed ratio of the high-speed spool of the engine 102 (e.g., the N2 spool, which includes the high-pressure compressor and the high-pressure turbine of the engine 102). Depending on the speed of the engine 102, the mechanical frequencies at which the BUG 108 and the IDG 110 vibrate may align with each other.

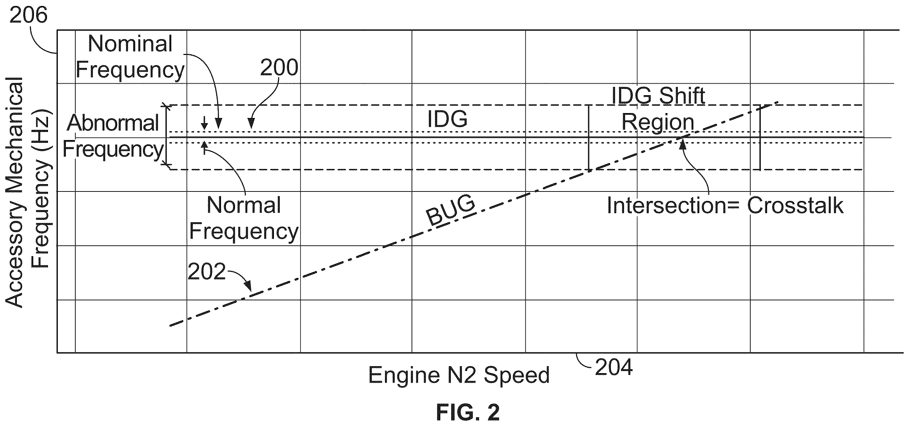

Figure 2 illustrates examples of relationships 200, 202 between an engine speed and mechanical frequencies of the rotating accessories 108, 110. The relationships 200, 202 are shown alongside a horizontal axis 204 representative of speeds of the engine 102 (e.g., the N2 spool speeds) and a vertical axis 206 representative of mechanical frequencies (e.g., frequencies of vibrations) of the rotating accessories 108, 110. As shown, the mechanical frequency of the IDG 110 may remain constant at a nominal value or nominal frequency represented by the relationship 200 at different engine speeds.

The mechanical frequency of the BUG 108 may depend on the engine speed, such as by increasing with increasing engine speeds (as shown in Figure 2 by the relationship 202). Depending on the engine speed, the mechanical frequencies of the BUG 108 and the IDG 110 may align or be equal. When the IDG 110 and the BUG 108 align in speed (e.g., mechanical frequency) during high vibration (e.g., vibrations having amplitudes that exceed the threshold amplitude), it may not be possible to distinguish the vibrations of the BUG 108 from the vibrations of the IDG 110. As a result, it may not be possible to distinguish between normal vibrations of the BUG 108 that are confused with vibrations of the IDG 110 (and, thus, appear abnormal) and abnormal vibrations of the BUG 108. This can cause the BUG 108 to be mechanically disconnected from the engine 102 and the accessory gear box 104 when the BUG 108 is operating normally due to the vibrations of the IDG 110 being confused as vibrations of the BUG 108.

To prevent this erroneous and unnecessary disconnection of the BUG 108, one or more embodiments of an engine accessory control system and method can shift the mechanical frequency of the IDG 110 away from the mechanical frequency of the BUG 108. This can prevent the vibrations of the IDG 110 from being confused for vibrations of the BUG 108 and incorrectly disconnecting the BUG 108 from the accessory gear box 104. Not all embodiments of the inventive subject matter are limited to IDGs 110 and BUGs 108, however, unless explicitly claimed or limited. For example, one or more embodiments may relate to shifting the frequencies of other rotating accessories coupled with an engine 102 or other rotating machine to distinguish between which rotating accessory is creating abnormal vibrations.

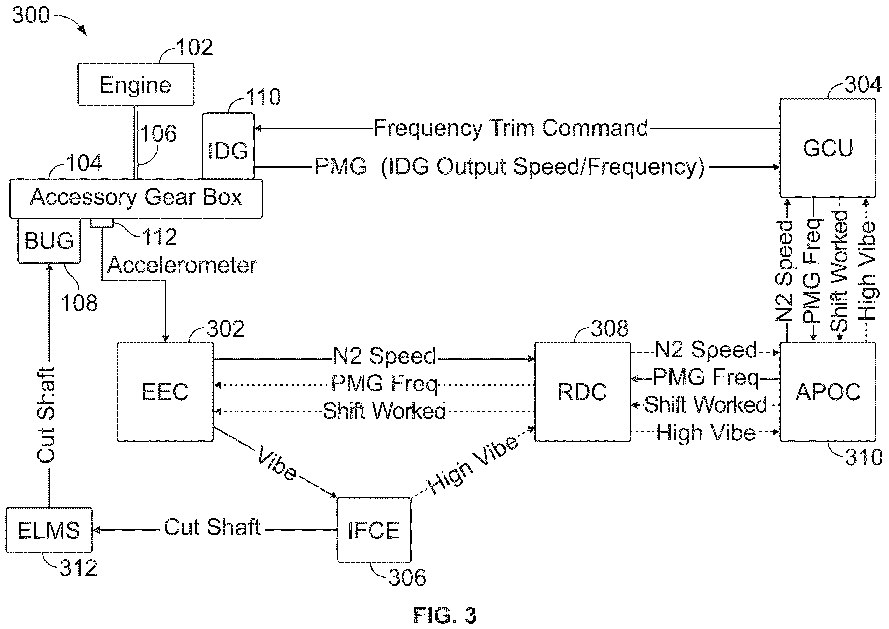

Figure 3 illustrates one example of an engine accessory control system 300. The control system 300 may be disposed entirely onboard the powered system, such as the aircraft. The control system 300 can include an engine control unit 302, such as an electronic engine control (EEC) unit. The engine control unit 302 can represent hardware circuitry that includes and/or is connected with one or more processors (e.g., microprocessors, integrated circuits, field programmable gate arrays, or the like) that perform the operations described herein in connection with the engine control unit 302.

The sensor 112, such as an accelerometer, can output signals indicative of the vibrations measured by the sensor 112. The engine control unit 302 can receive these signals and examine the signals to analyze the vibrations. For example, the engine control unit 302 can monitor the output from the accelerometer 112 and track vibrations occurring in the mechanical frequency range of the first rotating accessory 108 (e.g., the BUG). If high vibrations are sensed by the sensor 112 as tracked against the mechanical frequency of the BUG 108, the generator control unit (GCU) 304 may command a frequency shift in the second rotating accessory 110 (e.g., the IDG). For example, if the high vibrations are measured at a mechanical frequency that is at or within a frequency band of the operating speed of the BUG 108 (e.g., the N2 speed of the engine 102), then the generator control unit 304 may need to shift the operating or electrical frequency of the IDG 110 away from the BUG 108 to be able to distinguish between the source (e.g., the BUG 108 or the IDG 110) of the high vibrations.

The generator control unit 304 can send a signal to a trim coil of the IDG 110 to change the electric frequency of the IDG 110, which changes the speed and mechanical frequency of the IDG 110, thereby moving the mechanical speeds (and mechanical frequencies) of the BUG 108 and IDG 110 apart such that the generator control unit 304 can distinguish between the source of the high-amplitude vibrations. As described above, if the vibrations of the BUG 108 at the mechanical frequency of the BUG 108 exceed an amplitude threshold, then the integrated flight controls electronics unit 306 ("IFCE" in Figure 3) can control the BUG 108 to disconnect from the accessory gear box 104. For example, the IFCE 306 may send a signal ("Cut Shaft") to an electrical load management system 312 ("ELMS" in Figure 3), which sends the same or a similar signal to the BUG 108 to command the BUG 108 to disconnect the shaft that connects the first rotating accessory 108 to the accessory gear box 104. The generator control unit 304 can represent hardware circuitry that includes and/or is connected with one or more processors, similar to the engine control unit 302 or IFCE 306. One or more of the processors of the control units 302, 304, or 306 may be the same processor.

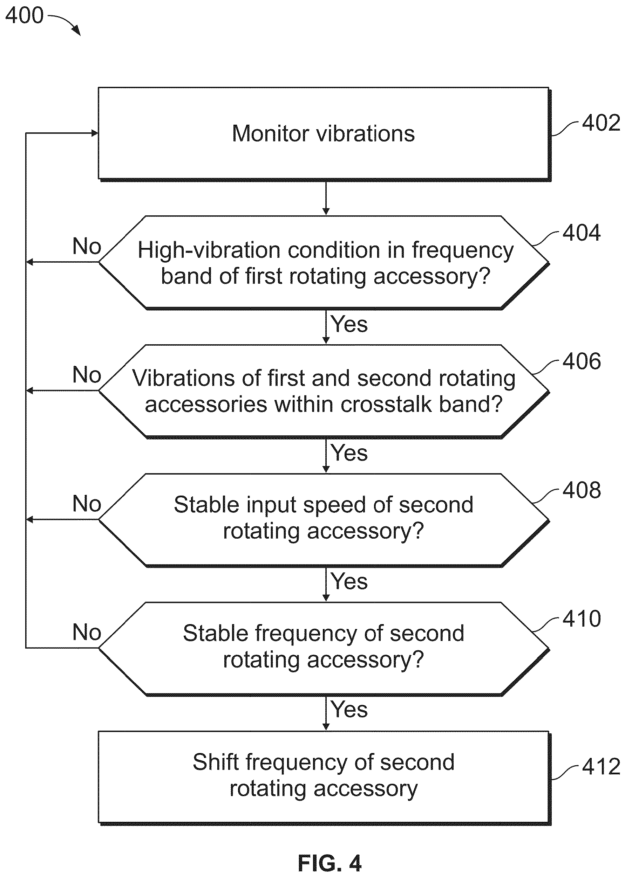

With continued reference to the control system 300 shown in Figure 3, Figure 4 illustrates a flowchart of one example of a method 400 for controlling engine accessories. The method 400 can represent operations performed by one or more components of the control system 300. At 402, vibrations are measured at or within a frequency band of an operating frequency of the first rotating accessory 108. These vibrations can be measured by the sensor 112 and a signal representative of these vibrations can be communicated from the sensor 112 to the engine control unit 302. This signal may be an analog signal in one example, so that the vibrations may be continuously or repeatedly communicated to the engine control unit 302. Alternatively, the signal may be a digital signal.

The frequency band can be a range of frequencies that extend on both sides of the operating frequency of the first rotating accessory 108. The size of the frequency band can be a default value, can be manually set, or can vary based on one or more factors (e.g., the age or health of the first rotating accessory 108, with the band increasing in size for an older or less healthy first rotating accessory 108 to ensure that impending failure of the first rotating accessory 108 is quickly detected). The frequency band can be sufficiently small to avoid too many false positive indications or confusion between the vibrations originating from the first rotating accessory 108 or the second rotating accessory 110, but sufficiently large to avoid missing too many instances of the vibrations indicating failure of the first rotating accessory 108. In one example, the size of this band may be determined empirically from previous failures of other rotating accessories 108. The operating frequency of the first rotating accessory 108 may be based on or may be the speed of the engine 102 that is powering the first rotating accessory 108. For example, the operating frequency of the first rotating accessory 108 may be the rotating speed or frequency of the N2 spool of the engine 102.

At 404, a decision is made as to whether the vibrations at or within the frequency band of the first rotating accessory 108 indicate a high-vibration condition. For example, the integrated flight controls electronics unit 306 can determine whether the amplitude of the measured vibrations within this frequency band exceed a designated amplitude threshold. The designated amplitude threshold may be a default value or a manually input value that is associated with vibrations indicative of a potentially failing rotating accessory 108 and/or 110.

If the high vibration condition is identified within the frequency band around the frequency of the first rotating accessory 108, then flow of the method 400 can proceed toward 406. But if the high vibration condition is not identified or the high vibration condition is not identified within the frequency band, then flow of the method 400 can terminate or return to another operation (e.g., 402) to continue monitoring operation of the rotating accessories 108, 110.

At 406, the operating frequencies of the first and second rotating accessories 108, 110 are compared to decide whether these operating frequencies are within a crosstalk band. For example, these frequencies can be compared to determine whether the frequencies are no farther apart than a designated range of frequencies from each other. If the operating frequencies are significantly different and do not both fall within this crosstalk band 210, then flow of the method 400 can terminate or return to another operation (e.g., 402) to continue monitoring operation of the rotating accessories 108, 110. If the operating frequencies are not significantly different and are within the crosstalk band, then flow of the method 400 can proceed toward 408. The size of the crosstalk band may be a default value, may be manually set, or can be based on empirical data. For example, based on other powered systems that used differently sized crosstalk bands and did (or did not) correctly identify the source of the high-amplitude vibrations, the size of the crosstalk band can be determined.

The decisions made at 404 and 406 can be made to ensure that any shift of the frequency at which the second rotating accessory 110 is operating (e.g., the operating or electrical frequency of the second rotating accessory 110) is done only when needed. For example, these decisions at 404, 406 may be made to determine whether the frequency shift of the second rotating accessory 110 is needed to ensure that the vibrations of the second rotating accessory 110 are not confused with the vibrations of the first rotating accessory 108.

At 408, the input speed of the second rotating accessory 110 is examined to decide whether this input speed is stable. This speed can be the speed at which the engine 102 is rotating the second rotating accessory 110 (e.g., via the shaft 106 and the accessory gear box 104). The input speed may be stable if the input speed does not change by more than a threshold amount or percentage for at least a designated time period. This threshold amount or percentage and the designated time period can be default values, non-zero values, or may be manually set based on empirical data.

If the input speed of the second rotating accessory 110 is not stable, then shifting or changing the frequency of the second rotating accessory 110 may risk disruption of the power output by the second rotating accessory 110 to the powered system. While the speed of the engine 102 is changing significantly or rapidly, shifting the frequency of the second rotating accessory 110 may not be required as the frequency of the vibrations of the first rotating accessory 108 may quickly move away from that of the frequency of the vibrations of the second rotating accessory 110. Such significant engine speed changes may be a significant variable or the most significant variable with respect to the ability of the second rotating accessory 110 to maintain constant frequency (e.g., maintain power quality guarantees to the powered system). Therefore, flow of the method 400 can terminate or return to another operation (e.g., 402) to continue monitoring operation of the rotating accessories 108, 110. If the input speed is stable, then the frequency of the second rotating accessory 110 might be able to be changed while ensuring there is no disruption of power to the powered system from the second rotating accessory 110. As a result, flow of the method 400 can proceed toward 410.

At 410, the frequency of the second rotating accessory 110 is examined to decide whether this frequency is stable. This frequency can be the number of electrical cycles per unit time (e.g., seconds) that the second rotating accessory 110 operates, or the speed at which the rotor of the second rotating accessory 110 is rotating. This frequency can be referred to as the electrical frequency or operating frequency of the second rotating accessory 110. The electrical or operating frequency of the second rotating accessory 110 may be stable if the frequency does not change by more than a threshold amount or percentage for at least a designated time period. This threshold amount or percentage and the designated time period can be default, non-zero values or may be manually set based on empirical data.

If the electrical or operating frequency of the second rotating accessory 110 is not stable, then shifting or changing the frequency of the second rotating accessory 110 may risk disruption of the power output by the second rotating accessory 110 to the powered system. For example, generator step on or step off loading of the second rotating accessory 110 can impact the speed of the second rotating accessory 110. A large step load of the second rotating accessory 110 may be needed to significantly change the frequency of the second rotating accessory 110. But these types of step loads may not occur frequently, so if such a large step load does occur (e.g., a step load that exceeds a designated threshold), then shifting the frequency of the second rotating accessory 110 may be held off or otherwise delayed (e.g., for a few seconds). This also can help ensure that power to the powered system from the second rotating accessory 110 is not disrupted.

If the electrical or operating frequency of the second rotating accessory 110 is not stable, then flow of the method 400 can terminate or return to another operation (e.g., 402) to continue monitoring operation of the rotating accessories 108, 110. If the electrical or operating frequency is stable, then the frequency of the second rotating accessory 110 might be able to be changed while ensuring there is no disruption of power to the powered system from the second rotating accessory 110. As a result, flow of the method 400 can proceed toward 412.

At 412, the electrical or operating frequency of the second rotating accessory 110 is changed. This frequency can be changed (e.g., shifted) so that the frequency of the second rotating accessory 110 is different from the frequency of the first rotating accessory 108. Shifting the operating or electrical frequency of the second rotating accessory 110 can separate the frequencies at which the first and second rotating accessories 108, 110 vibrate and help distinguish between the source of the high-amplitude vibrations. The engine control unit 302 or generator control unit 304 can examine the amplitude of the vibrations measured by the sensor 112 at the frequency of the first rotating accessory 108 following the frequency shift to determine whether the first rotating accessory 108 is failing (e.g., the vibration amplitudes exceed a threshold amplitude). The first rotating accessory 108 may then be disconnected from the engine 102, as described herein. Otherwise, the first rotating accessory 108 is not identified as the source of the high-amplitude vibrations, and the second rotating accessory 110 may be identified as the source. The second rotating accessory 110 may then optionally be deactivated.

With continued reference to the control system 300 shown in Figure 3 and the flowchart of the method 400 shown in Figure 4, examples of operation of the control system 300 and the method 400 are now provided. During operation of the powered system, the engine 102 can operate over a wide range of speeds. The speed of the first rotating accessory 108 (e.g., the BUG) may be tied to the speed of the N2 spool of the engine 102. As a result, the speed of the BUG 108 may increase and decrease at a designated ratio relative to the speed of the N2 spool of the engine 102. Conversely, the speed of the main rotor of the second rotating accessory 110 (e.g., the IDG) may be independent of the speed of the engine 102. For example, the IDG 110 may operate at a designated speed of four hundred hertz (nominally) regardless of the speed of the engine 102 (e.g., while the engine 102 is activated and operating).

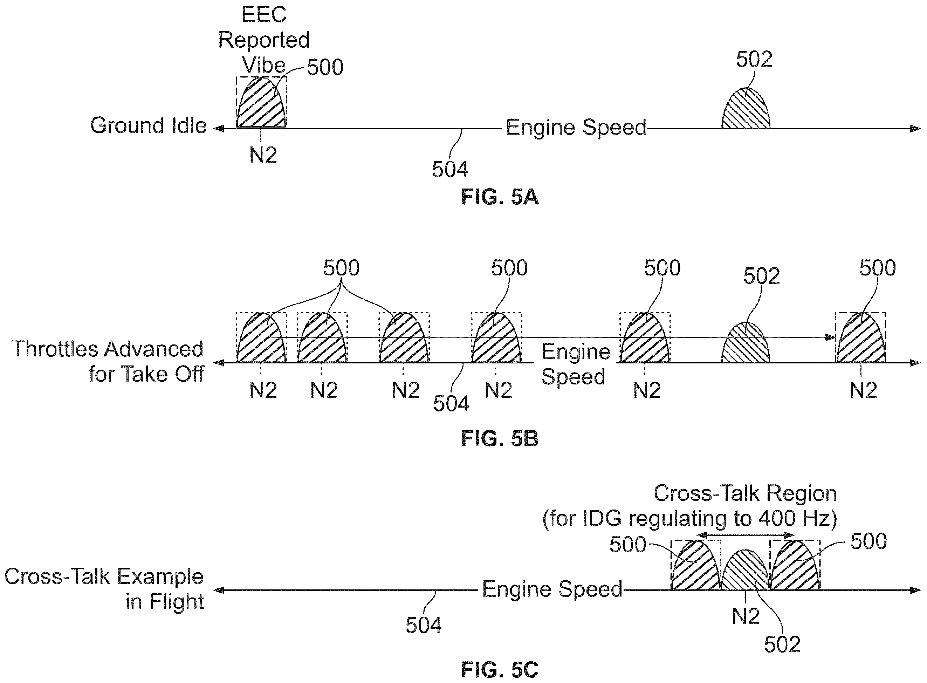

Figures 5A-C illustrate examples of vibrations 500, 502 of the first and second rotating accessories 108, 110 versus or relative to different speeds of the engine 102. Three examples of the vibrations 500, 502 are shown along a horizontal speed line 504 representing different speeds of the engine 102 (with slower speeds toward the left side of the speed line 504 and faster speeds toward the right side of the speed line 504). Figure 5A illustrates examples of the vibrations 500, 502 while the powered system is not in flight and the engine 102 is operating at ground idle speed). Figure 5B illustrates examples of the vibrations 500, 502 during acceleration of the speed of the engine 102, such as during throttle acceleration of the powered system for takeoff of an aircraft (as the powered system). Figure 5C illustrates one example of the vibrations 500, 502 during operation of the powered system, such as during flight of the powered system.

The N2 spool speed is marked by a location labeled "N2" along the speed line 504 in each of Figures 5A-C. As shown, because the vibrations 500 of the BUG 108 are tied to or dependent upon the speed of the engine 102 while the vibrations 502 of the IDG **110** are not tied to or dependent upon the speed of the engine 102, the BUG vibrations 500 are at different locations along the speed line 504 while the IDG vibrations 502 remain at the same location along the speed line 504 in Figures 5A-C. The vibrations 500, 502 may be farther apart during idling of the engine 102 (e.g., Figure 5A), while the BUG vibrations 500 move toward the IDG vibrations 502 as the throttle of the engine 102 increases (e.g., Figure 5B), and the BUG vibrations 500 and the IDG vibrations 502 may be closer together during operation (e.g., flight) of the engine 102 and powered system (e.g., Figure 5C).

The sensor 112 can measure and report measured vibrations to an integrated flight controls electronics unit 306 ("IFCE" in Figure 3). The integrated flight controls electronics unit 306 can represent hardware circuitry that includes and/or is connected with one or more processors. One or more of the processors of the integrated flight controls electronics unit 306 may be the same as, or shared with, one or more of the processors of the engine control unit 302 and/or the generator control unit 304. In one example, the integrated flight controls electronics unit 306 can represent integrated flight controls electronics of an aircraft. The parameters of the measured vibrations (e.g., the mechanical frequency and/or amplitude) may be sent directly to the integrated flight controls electronics unit 306 from the sensor 112, or may be sent via the engine control unit 302, as shown in Figure 3. The signal that includes these measurements is represented as "Vibe" in Figure 3.

The integrated flight controls electronics unit 306 can compare the amplitude of the measured vibrations to an amplitude threshold to determine whether a high vibration condition exists. Based on this comparison, the integrated flight controls electronics unit 306 can output a discrete digital parameter indicating a high or low vibration condition. A digital signal indicating a high vibration condition may be generated by the integrated flight controls electronics unit 306 and output to the generator control unit 304. A digital signal indicating a low vibration condition optionally may be generated by the integrated flight controls electronics unit 306 and output to the generator control unit 304 responsive to the magnitude of the measured vibrations not exceeding the amplitude threshold. The integrated flight controls electronics unit 306 may output only a signal indicating a high vibration condition to the generator control unit 304 but not a low vibration condition, with the signal indicating the high vibration condition labeled as "High Vibe" in Figure 3. The signal may be sent directly to the generator control unit 304, or may be sent to the generator control unit 304 via a remote data concentrator 308 ("RDC" in Figure 3) and/or an A629 Plastic Optical Coupler 310 ("APOC" in Figure 3). Each of these components can represent hardware circuitry that includes and/or is connected with one or more processors, and may share one or more processors with other components described herein.

The electrical or operating frequency of the IDG 110 may be shifted by the generator control unit 304 if (a) a high vibration condition is sensed in a frequency band around the frequency of the BUG vibrations 502, (b) the frequencies of the vibrations 500, 502 of the BUG 108 and the IDG 110 are within the crosstalk band of each other, (c) the input speed of the IDG 110 is stable (e.g., Figures 5A and 5C), and (d) the electrical or operating frequency of the IDG 110 is stable, as described above. In one example, if any of these conditions is not true or does not occur, then the electrical or operating frequency of the IDG 110 is not shifted.

If the measured vibrations are determined to originate from the IDG 110 after shifting the frequency of the IDG 110, this shift can result in what is sensed by the engine control unit 302 as lower BUG vibrations 500. The integrated flight controls electronics unit 306 can then report a low vibration condition via a signal sent to the generator control unit 304. Because the generator control unit 304 is aware that the operating or electrical frequency of the IDG 110 was shifted and the generator control unit 304 is now receiving a low vibration signal, the generator control unit 304 can decide that the frequency shift worked, and can report the successful shift to the engine control unit 302 via a signal (e.g., "Shift Worked" in Figure 3). The engine control unit 302 may attenuate the vibration signal ("Vibe" in Figure 3) being transmitted to the integrated flight controls electronics unit 306 if a crosstalk condition exists, as described herein. This can prevent the BUG 108 from being erroneously disconnected from the engine 102, and can allow protection features of the IDG 110 to work and protect the IDG 110 from failing or damaging other parts of the system 300.

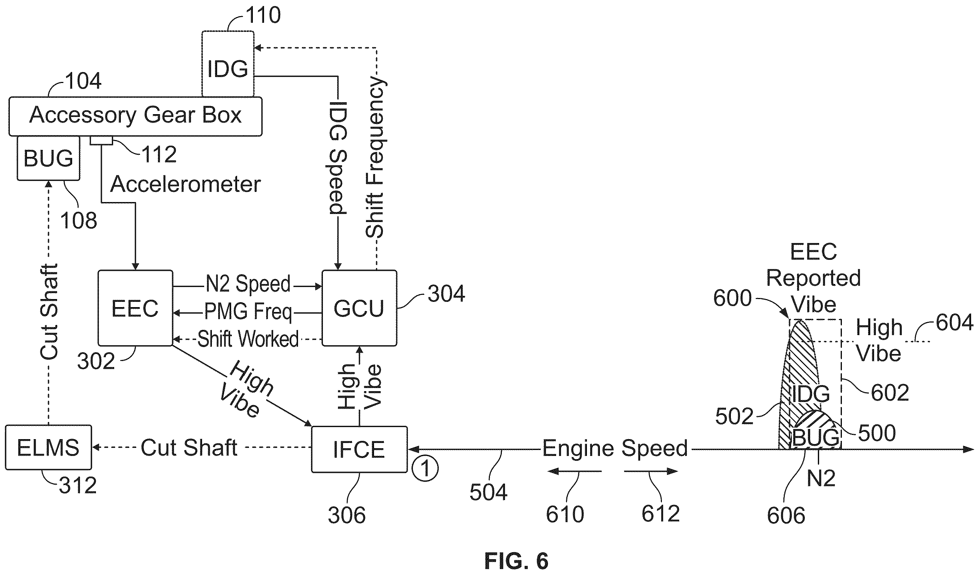

Figures 6 through 8 illustrate examples of operation of the control system 300. In Figure 6, higher magnitude vibrations 600 are sensed at or within a frequency band 602 of the operating frequency of the first rotating accessory 108. These vibrations 600 are identified as high magnitude vibrations as the amplitude (e.g., height above the speed line 504) of the vibrations 600 exceeds an amplitude threshold 604. The integrated flight controls electronics unit 306 starts a high vibration persistence timer, and when a time limit at high vibration is met, may command a disconnect of the first rotating accessory 108. Because the vibrations 600 have a mechanical frequency that is at or within the frequency band 602 around the operating frequency of the first rotating accessory 108, the control system 300 (e.g., the generator control unit 304) may be unable to discern or distinguish between the source of the vibrations 600. That is, the generator control unit 304 may be unable to determine whether the vibrations 600 are those of the first rotating accessory 108 (thereby requiring disconnection to prevent damage to the engine 102) or the second rotating accessory 110 (which may not require disconnection from the engine 102).

As described above, the engine control unit 302 detects the vibration magnitude, and the integrated flight controls electronics unit then determines if this vibration magnitude exceeds an allowable threshold and sends a High Vibe signal to the generator control unit 304 (all while continuing to increment its high vibration persistence timer) to indicate that the sensed vibrations 600 exceed the amplitude threshold 604. The generator control unit 304 calculates a frequency band 602 around the operating frequency of the first rotating accessory 108 by applying gear ratios against engine speed (N2 spool speed or "N2 Speed" in Figure 6) as transmitted by the engine control unit 302 or against an input speed sensor ("IDG Speed" in Figure 6) mounted within the second rotating accessory 110. The generator control unit 304 is aware of the electrical and mechanical frequency 606 of the second rotating accessory 110 due to the generator control unit 302 controlling this operating/electrical frequency 606. The generator control unit 304 optionally can communicate a signal (e.g., "PMG Freq") to the engine control unit 302 to inform the engine control unit 302 of the operating frequency 606. The generator control unit 304 uses the high vibration indication and mechanical frequency bands to determine if a frequency shift of the second rotating accessory 110 is warranted.

The generator control unit 304 can examine the input speed of the second rotating accessory 110 ("IDG Speed"), and the output speed (e.g. mechanical frequency) of the second rotating accessory 110 ("PMG Freq") to determine sufficient stability to perform a frequency shift of the second rotating accessory 110.

The generator control unit 304 can initiate a frequency shift of the second rotating accessory 110 in response to (1) the high vibration condition being sensed within the frequency band 602 around the operating frequency of the first rotating accessory 108, (2) the frequencies, 606 of the vibrations 500, 502 being within a crosstalk band of each other, (3) the input speed of the second rotating accessory 110 being stable, and (4) the operating or electrical frequency of the second rotating accessory 110 being stable.

In order to protect the engine, this high vibration persistence timer increments anytime high vibration is sensed around the frequency band of the first rotating accessory 108 unless it is determined the vibration source is the second rotating accessory 110. For example, if the first rotating accessory 108 is the cause of the high-amplitude vibrations (and not the second rotating accessory 110), then the high-amplitude vibrations will remain at the operating frequency of the first rotating accessory 108 or within the frequency band 602 of the operating frequency of the first rotating accessory 108. If the persistence timer reaches this upper limit, then the integrated flight controls electronics unit 306 can command the first rotating accessory 108 to disconnect from the engine 102 to prevent damage to the engine 102.

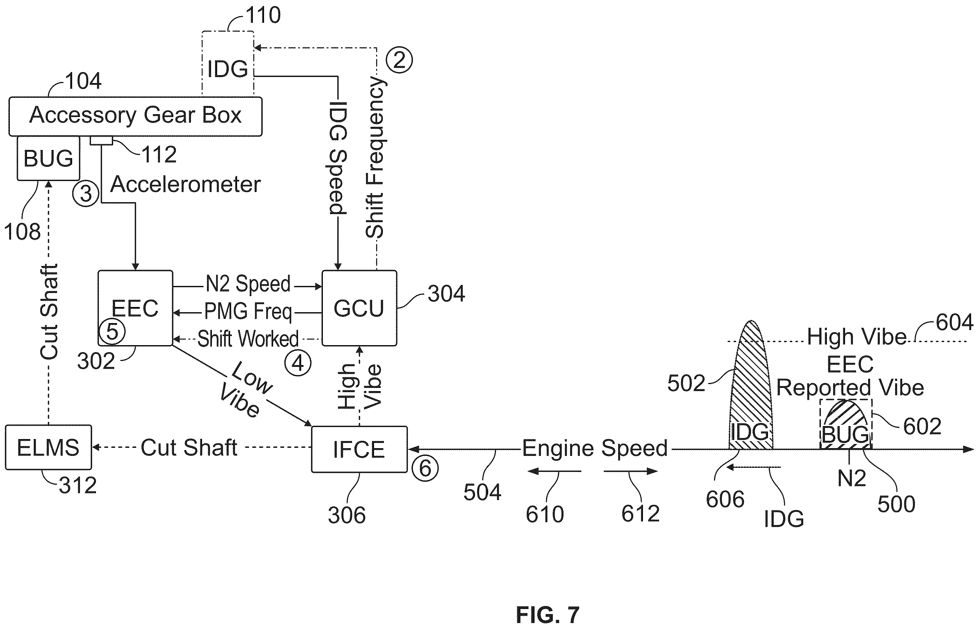

While the high vibration persistence timer continues to increment, the generator control unit 304 can then shift or change the operating or electrical frequency 606 of the second rotating accessory 110. For example, the generator control unit 304 can communicate a signal ("Shift Frequency" in Figure 7) to the second rotating accessory 110 (e.g., to the trim coil of the second rotating accessory 110). This signal can direct a magnitude and a direction by which the operating/electrical frequency 606 of the second rotating accessory 110 is to shift (e.g., increase or decrease).

The amount or magnitude of this frequency shift may be set to a fixed delta value, or may not always be set to a fixed delta value. Additionally, the direction of the shift (e.g., up/increase or down/decrease) may be different in different scenarios. For example, the amount or magnitude of the frequency shift can be dependent on the main rotor frequency of the second rotating accessory 110 (which can be a nominally fixed value to maintain power quality, such as four hundred hertz or another value). When the speed of the engine 102 is stable, the operating/electrical frequency 606 of the second rotating accessory 110 can shift to a frequency that will be outside of the crosstalk band. The speed of the engine 102, which sets the frequency of the first rotating accessory 108, can vary based on several factors (e.g., a pilot commanded thrust, turbulence, etc.). Therefore, larger or smaller shifts of the operating/electrical frequency of the second rotating accessory 110 may be needed based on these factors. If the commanded thrust or output from the engine 102 increases, turbulence or other loads on the engine 102 increases, etc., then a larger frequency shift may be used (compared to smaller increases in the thrust or output, decreases in the thrust or output, decreases in turbulence, decreases in the load placed on the engine 102, etc.).

The direction of the frequency shift of the second rotating accessory 110 may be selected by the generator control unit 304 based on the speed at which the first rotating accessory 108 is rotating relative to the rotor speed of the second rotating accessory 110. For example, if the first rotating accessory 108 is rotating at a faster speed than the second rotating accessory 110, then the operating/electrical frequency 606 of the second rotating accessory 110 may be decreased 610 to ensure separation between the frequencies of the mechanical vibrations of the first and second rotating accessories 108, 110. If the first rotating accessory 108 is rotating at a slower speed than the second rotating accessory 110, then the operating/electrical frequency 606 of the second rotating accessory 110 may be increased 612 to ensure separation between the frequencies of the mechanical vibrations of the first and second rotating accessories 108, 110. The frequency 606 of the second rotating accessory 110 may be shifted away from the upper or lower extreme end of the operating speed of the first rotating accessory 108 to ensure that the mechanical frequencies of the vibrations 500, 502 become spaced apart.

As shown in Figure 7, shifting the operating/electrical frequency 606 of the second rotating accessory 110 down can move the mechanical frequency of the vibrations 502 downward (e.g., decreases the mechanical frequency), so that the vibrations 502 move away from the vibrations 500 of the first rotating accessory 108. Alternatively, the operating/electrical frequency 606 of the second rotating accessory 110 may be shifted up (e.g., increased).

With the mechanical frequencies of the vibrations 500, 502 spaced or shifted apart, the generator control unit 304 can determine whether the high-amplitude vibrations 600 are the same vibrations as the vibrations 500 from the first rotating accessory 108 or the vibrations 502 from the second rotating accessory 110. As shown in Figure 7, the generator control unit 304 can determine that it is the vibrations 502 from the second rotating accessory 110 that are the high-amplitude vibrations 600. The generator control unit 304 can send a signal ("Shift Worked" in Figure 7) to notify the engine control unit 302 that, for example, at least three of a maximum of five frequency shifts successfully discerned the source of high vibration is related to the second rotating accessory 110 if the frequency shift of the second rotating accessory 110 resulted in the high vibration condition within the frequency band of the first rotating accessory 108 going from true to false when the frequency and vibration 606 and 502 are no longer aligned with the frequency and vibration 500 and 602.

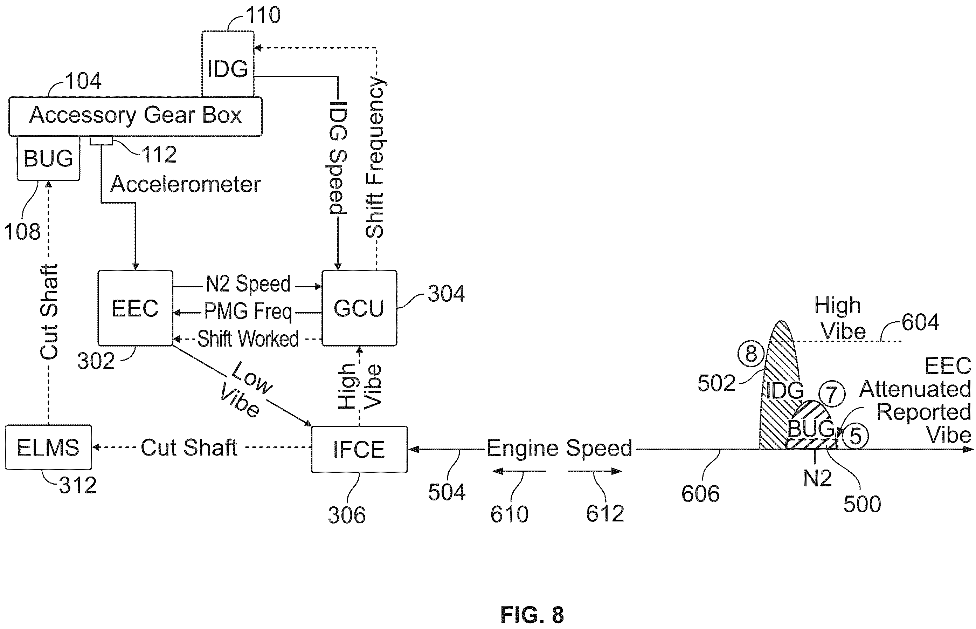

As shown in Figure 8, upon receiving the indication "Shift Worked," the engine control unit 302 can then attenuate the reported vibration signal to the integrated flight controls electronics unit 306 thereby stopping the high vibration persistence timer from incrementing and preventing erroneous disconnect of the first rotating accessory 108. The second rotating accessory 108, which is the source of high vibration, can then perform its own, independent disconnect function to protect the engine.

During operation of the engine 102, speed transitions or oscillations may cause the operating frequency of the first rotating accessory 108 to vary. This can cause the operating frequencies, 606 of the first and second rotating accessories 108, 110 to move in and out of the crosstalk band of each other. For example, speed transitions having higher acceleration or deceleration rates can take the operating frequency of the BUG 108 quickly out of the crosstalk band with the IDG 110 operating frequency 606. These transitions may occur during pilot-commanded thrust changes of the powered system. Slower, gentler engine speed oscillations may be induced by turbulence, for example. These may cause the operating frequency of the BUG 108 to more slowly move into and out of the crosstalk band with the operating frequency 606 of the IDG 110. These can result in the purpose of the frequency shift of the IDG 110 being defeated (e.g., separating the frequencies for vibration amplitude discrimination). In one example, multiple frequency shifts of the operating frequency 606 of the second rotating accessory 110 may be commanded, and the engine control unit 302 can examine a majority result to determine whether the high-amplitude vibrations are from the first rotating accessory 108 or the second rotating accessory 110. For example, if the frequency 606 of the IDG 110 is shifted three times and the engine control unit 302 determines that the high-amplitude vibrations 600 are from the IDG 110 and not the BUG 108 two of those three times, then the integrated flight controls electronics unit 306 may not command the BUG 108 to disconnect from the engine 102.

In a situation where the high-amplitude vibrations 600 are associated with or caused by the first rotating accessory 108, the frequency shift of the operating frequency 606 of the second rotating accessory 110 will not eliminate, reduce, or attenuate these high-amplitude vibrations 600. Instead, the high-amplitude vibrations 600 will remain at the frequency of the first rotating accessory 108 or within the frequency band 602 of the first rotating accessory 108. This can ensure that a failing first rotating accessory 108 is identified even with the frequency shift and is commanded to disconnect from the engine 102.

Additionally, as described above, the persistence timer may have an upper limit or maximum value at which the first rotating accessory 108 is directed to disconnect from the engine 102. If several frequency shifts of the second rotating accessory 110 are unsuccessful in distinguishing between the first or second rotating accessories 108, 110 as the source of the high-amplitude vibrations 600 due to the engine speed wandering or changing (and defeating the frequency shifts), then the first rotating accessory 108 may still be directed to disconnect upon the timer reaching the upper limit.

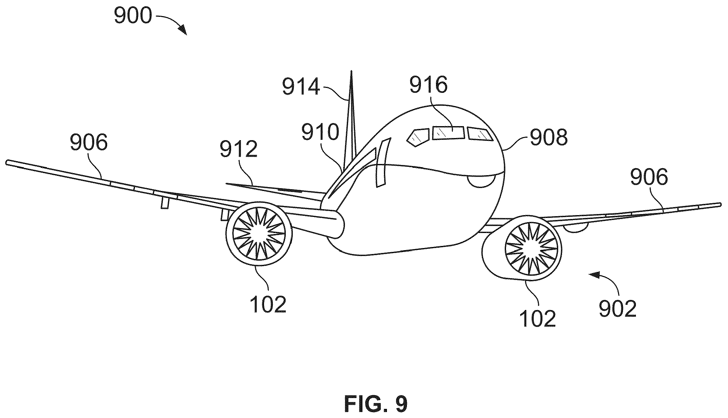

Figure 9 illustrates a perspective front view of one example of a powered system 900 described above. The powered system 900 can be an aircraft or another system. The powered system 900 includes a propulsion system 902 that includes engines 102, for example. Optionally, the propulsion system 902 may include more engines 102 than shown. The engines 102 are carried by wings 906 of the aircraft 900. In other examples, the engines 102 may be carried by a fuselage 908 and/or an empennage 910. The empennage 910 may also support horizontal stabilizers 912 and a vertical stabilizer 914. The fuselage 908 of the aircraft 900 defines an internal cabin 916, which includes a flight deck or cockpit, one or more work sections (for example, galleys, personnel carry-on baggage areas, and the like), one or more passenger sections (for example, first class, business class, and coach sections), one or more lavatories, and/or the like. The aircraft 900 can be sized, shaped, and configured differently than shown in Figure 9. The pilot or other operators described herein may be onboard the aircraft or may be off-board the aircraft and remotely monitoring and/or controlling the aircraft. The first and second rotating accessories 108, 110 and the control system 300 described herein may be onboard the powered system 900 for powering and controlling various components of the powered system 900.

Further, the disclosure comprises examples according to the following clauses:
Clause 1: An engine accessory control system, comprising:
   a sensor configured to measure vibrations during operation of an engine that is connected with and powers a first rotating accessory and a second rotating accessory; and one or more control units configured to: identify a high vibration condition responsive to (a) an amplitude of the vibrations exceeding a vibration threshold and (b) a mechanical frequency of the vibrations being within a designated frequency band extending around a first operating frequency of the first rotating accessory; decide whether a second operating frequency of the second rotating accessory and the first operating frequency of the first rotating accessory are within a designated crosstalk band from each other responsive to identifying the high vibration condition; and responsive to deciding that the first operating frequency and the second operating frequency are within the designated crosstalk band, control the second rotating accessory by shifting the second operating frequency of the second rotating accessory away from the first operating frequency of the first rotating accessory.
Clause 2: The engine accessory control system of Clause 1, wherein the one or more control units are configured to shift the second operating frequency of the second rotating accessory responsive to (a) identifying the high vibration condition, (b) deciding that the first operating frequency and the second operating frequency are within the designated crosstalk band, (c) an input speed of the second rotating accessory being stable, and (d) the second operating frequency being stable.
Clause 3: The engine accessory control system of Clause 1 or 2, wherein the first rotating accessory is a backup generator and the second rotating accessory is an integrated drive generator.
Clause 4: The engine accessory control system of any one of Clauses 1 to 3, wherein the one or more control units are further configured to: associate the vibrations as being caused by operation of the first rotating accessory or the second rotating accessory after the second operating frequency of the second rotating accessory is changed; and disconnect the first rotating accessory from the engine responsive to the one or more control units associating the vibrations as being caused by the first rotating accessory.
Clause 5: The engine accessory control system of any one of Clauses 1 to 4, wherein the one or more control units are configured to change the second operating frequency by increasing or decreasing the second operating frequency based on an operating speed of the first rotating accessory.
Clause 6: The engine accessory control system of any one of Clauses 1 to 4, wherein the one or more control units are configured to change the second operating frequency of the second rotating accessory by a magnitude that is based on a speed at which the engine is operating.
Clause 7: The engine accessory control system of any one of Clauses 1 to 6, wherein the one or more control units are further configured to: shift the second operating frequency multiple times due to changes in a speed at which the engine operates; and decide whether the first rotating accessory or the second rotating accessory is creating the vibrations based on whether a majority of the multiple times results in the vibrations that exceed the vibration threshold remain within the frequency band.
Clause 8: The engine accessory control system of any one of Clauses 1 to 6, wherein the one or more control units are further configured to: shift the second operating frequency multiple times due to changes in a speed at which the engine operates; and direct the first rotating accessory to disconnect from the engine responsive to the vibrations that exceed the vibration threshold remaining within the frequency band for at least an upper time limit.
Clause 9: A method, comprising: measuring vibrations during operation of an engine that is connected with and powers a first rotating accessory and a second rotating accessory; identifying a high vibration condition responsive to (a) an amplitude of the vibrations that are measured exceeding a vibration threshold and (b) a mechanical frequency of the vibrations being within a designated frequency band extending around a first operating frequency of the first rotating accessory;
   deciding whether a second operating frequency of the second rotating accessory and the first operating frequency of the first rotating accessory are within a designated crosstalk band from each other responsive to identifying the high vibration condition; and responsive to deciding that the first operating frequency and the second operating frequency are within the designated crosstalk band, shifting the second operating frequency of the second rotating accessory away from the first operating frequency of the first rotating accessory.
Clause 10: The method of Clause 9, wherein the second operating frequency of the second rotating accessory is shifted responsive to (a) identifying the high vibration condition, (b) deciding that the first operating frequency and the second operating frequency are within the designated crosstalk band, (c) an input speed of the second rotating accessory being stable, and (d) the second operating frequency being stable.
Clause 11: The method of Clause 9 or 10, further comprising: identifying the vibrations as being caused by operation of the first rotating accessory or the second rotating accessory after the second operating frequency of the second rotating accessory is changed; and disconnecting the first rotating accessory from the engine responsive to associating the vibrations as being caused by the first rotating accessory.
Clause 12: The method of any one of Clauses 9 to **11,** wherein the second operating frequency is changed by increasing or decreasing the second operating frequency based on an operating speed of the first rotating accessory.
Clause 13: The method of any one of Clauses 9 to 12, wherein the second operating frequency of the second rotating accessory is changed by a magnitude that is based on a speed at which the engine is operating.
Clause 14: The method of any one of Clauses 9 to 13, wherein the second operating frequency is changed multiple times due to changes in a speed at which the engine operates, and further comprising: deciding whether the first rotating accessory or the second rotating accessory is creating the vibrations based on whether a majority of the multiple times results in the vibrations that exceed the vibration threshold remain within the frequency band.
Clause 15: The method of any one of Clauses 9 to **14,** wherein the second operating frequency is changed multiple times due to changes in a speed at which the engine operates, and further comprising: directing the first rotating accessory to disconnect from the engine responsive to the vibrations that exceed the vibration threshold remaining within the frequency band for at least an upper time limit.
Clause 16: An aircraft engine accessory control system, comprising: a motion sensor configured to measure vibrations during operation of an engine that is connected with and powers first and second rotating accessories; and one or more control units configured to: identify a high vibration condition responsive to (a) an amplitude of the vibrations that are measured exceeding a vibration threshold and (b) a frequency of the vibrations being within a frequency band of an operating frequency of the first rotating accessory; decide whether an operating frequency of the second rotating accessory and the operating frequency of the first rotating accessory are within a crosstalk band of each other, whether an input speed of the second rotating accessory is stable, and whether the operating frequency of the second rotating accessory is stable; and responsive to deciding that the operating frequency of the first rotating accessory and the operating frequency of the second rotating accessory are within the crosstalk band, the input speed is stable, and the operating frequency of the second rotating accessory is stable, shift the operating frequency of the second rotating accessory away from the operating frequency of the first rotating accessory and decide whether the high vibration condition continues.
Clause 17: The aircraft engine accessory control system of Clause 16, wherein the one or more control units are further configured to associate the vibrations as being caused by operation of the first rotating accessory responsive to the high vibration condition continuing after the operating frequency of the second rotating accessory is shifted.
Clause 18: The aircraft engine accessory control system of Clause 17, wherein the one or more control units are further configured to disconnect the first rotating accessory from the engine responsive to the high vibration condition continuing after the operating frequency of the second rotating accessory is shifted.
Clause 19: The aircraft engine accessory control system of any one of Clauses 16 to 18, wherein the one or more control units are configured to change the operating frequency of the second rotating accessory by increasing or decreasing the operating frequency of the second rotating accessory based on an operating speed of the first rotating accessory and by a magnitude that is based on a speed at which the engine is operating.
Clause 20: The aircraft engine accessory control system of any one of Clauses 16 to 19, wherein the one or more control units are further configured to: shift the operating frequency of the second rotating accessory multiple times due to changes in a speed at which the engine operates; and decide whether the first rotating accessory or the second rotating accessory is creating the vibrations based on whether a majority of the multiple times results in the vibrations that exceed the vibration threshold remain within the frequency band.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. An engine accessory control system (300), comprising:
a sensor (112) configured to measure vibrations during operation of an engine (102) that is connected with and powers a first rotating accessory (108) and a second rotating accessory (110); and
one or more control units (302, 304, or 306) configured to:
identify a high vibration condition responsive to (a) an amplitude of the vibrations exceeding a vibration threshold and (b) a mechanical frequency of the vibrations being within a designated frequency band (602) extending around a first operating frequency of the first rotating accessory;
decide whether a second operating frequency of the second rotating accessory and the first operating frequency of the first rotating accessory are within a designated crosstalk band from each other responsive to identifying the high vibration condition; and
responsive to deciding that the first operating frequency and the second operating frequency are within the designated crosstalk band, control the second rotating accessory by shifting the second operating frequency of the second rotating accessory away from the first operating frequency of the first rotating accessory.

2. The engine accessory control system of claim **1,** wherein the one or more control units are configured to shift the second operating frequency of the second rotating accessory responsive to (a) identifying the high vibration condition, (b) deciding that the first operating frequency and the second operating frequency are within the designated crosstalk band, (c) an input speed of the second rotating accessory being stable, and (d) the second operating frequency being stable.

3. The engine accessory control system of claim 1 or 2, wherein the second rotating accessory is an integrated drive generator.

4. The engine accessory control system of any one of claims 1 to 3, wherein the one or more control units are further configured to:
associate the vibrations as being caused by operation of the first rotating accessory or the second rotating accessory after the second operating frequency of the second rotating accessory is changed; and
disconnect the first rotating accessory from the engine responsive to the one or more control units associating the vibrations as being caused by the first rotating accessory.

5. The engine accessory control system of any one of claims 1 to 4, wherein the one or more control units are configured to change the second operating frequency by increasing or decreasing the second operating frequency based on an operating speed of the first rotating accessory.

6. The engine accessory control system of any one of claims 1 to 4, wherein the one or more control units are configured to change the second operating frequency of the second rotating accessory by a magnitude that is based on a speed at which the engine is operating.

7. The engine accessory control system of any one of claims 1 to 6, wherein the one or more control units are further configured to:
shift the second operating frequency multiple times due to changes in a speed at which the engine operates; and
decide whether the first rotating accessory or the second rotating accessory is creating the vibrations based on whether a majority of the multiple times results in the vibrations that exceed the vibration threshold remain within the frequency band.

8. The engine accessory control system of any one of claims 1 to 6, wherein the one or more control units are further configured to:
shift the second operating frequency multiple times due to changes in a speed at which the engine operates; and
direct the first rotating accessory to disconnect from the engine responsive to the vibrations that exceed the vibration threshold remaining within the frequency band for at least an upper time limit.

9. A method (400), comprising:
measuring vibrations during operation of an engine (102) that is connected with and powers a first rotating accessory (108) and a second rotating accessory (110);
identifying a high vibration condition responsive to (a) an amplitude of the vibrations that are measured exceeding a vibration threshold and (b) a mechanical frequency of the vibrations being within a designated frequency band (602) extending around a first operating frequency of the first rotating accessory;
deciding whether a second operating frequency of the second rotating accessory and the first operating frequency of the first rotating accessory are within a designated crosstalk band from each other responsive to identifying the high vibration condition; and
responsive to deciding that the first operating frequency and the second operating frequency are within the designated crosstalk band, shifting the second operating frequency of the second rotating accessory away from the first operating frequency of the first rotating accessory.

10. The method of claim 9, wherein the second operating frequency of the second rotating accessory is shifted responsive to (a) identifying the high vibration condition, (b) deciding that the first operating frequency and the second operating frequency are within the designated crosstalk band, (c) an input speed of the second rotating accessory being stable, and (d) the second operating frequency being stable.

11. The method of claim 9 or 10, further comprising:
identifying the vibrations as being caused by operation of the first rotating accessory or the second rotating accessory after the second operating frequency of the second rotating accessory is changed; and
disconnecting the first rotating accessory from the engine responsive to associating the vibrations as being caused by the first rotating accessory.

12. The method of any one of claims 9 to **11,** wherein the second operating frequency is changed by increasing or decreasing the second operating frequency based on an operating speed of the first rotating accessory.

13. The method of any one of claims 9 to 12, wherein the second operating frequency of the second rotating accessory is changed by a magnitude that is based on a speed at which the engine is operating.

14. The method of any one of claims 9 to 13, wherein the second operating frequency is changed multiple times due to changes in a speed at which the engine operates, and further comprising:
deciding whether the first rotating accessory or the second rotating accessory is creating the vibrations based on whether a majority of the multiple times results in the vibrations that exceed the vibration threshold remain within the frequency band.

15. The method of any one of claim 9 to 14, wherein the second operating frequency is changed multiple times due to changes in a speed at which the engine operates, and further comprising:
directing the first rotating accessory to disconnect from the engine responsive to the vibrations that exceed the vibration threshold remaining within the frequency band for at least an upper time limit.
